# EUROPÄISCHE PATENTSCHRIFT

(11) **EP 3 436 796 B1**
(45) Veröffentlichungstag und Bekanntmachung des Hinweises auf die Patenterteilung: **11.03.2020**
(21) Anmeldenummer: 17714174.4
(22) Anmeldetag: 27.03.2017
(51) Int. Cl.: G01N 1/28, B03C 1/28, G01N 33/20, G01N 23/20

(54) **VORRICHTUNG UND VERFAHREN ZUR AUFBEREITUNG EINES PROBEMATERIALS**
APPARATUS AND METHOD FOR PREPARING A SAMPLE MATERIAL
DISPOSITIF ET PROCÉDÉ DE PRÉPARATION D'UNE MATIÈRE À ANALYSER

(30) Priorität: 30.03.2016 DE 102016205243
(43) Veröffentlichungstag der Anmeldung: 06.02.2019
(73) Patentinhaber: thyssenkrupp Industrial Solutions AG, 45143 Essen (DE); thyssenkrupp AG, 45143 Essen (DE)
(72) Erfinder: TEUTENBERG, Reinhard, 59423 Unna (DE)
(74) Vertreter: thyssenkrupp Intellectual Property GmbH
(86) Internationale Anmeldenummer: PCT/EP2017/057175
(87) Internationale Veröffentlichungsnummer: WO 2017/167681

(56) Entgegenhaltungen:
- EP-A2- 1 052 500
- US-A- 3 006 472
- US-A- 3 274 303
- US-A- 3 279 602
- US-A- 3 318 447
- Herzog Maschinenfabrik: "HP-MA / HP-PA Pulverizing Mill and Pellet Press in Modular Design", , 7. Juli 2014 (2014-07-07), XP055381616, Gefunden im Internet: URL:http://www.herzog-maschinenfabrik.de/f ileadmin/content/downloads/en/productbroch ure/HZ_PB_HP-MA_HP-PA_en.pdf [gefunden am 2017-06-14]
- Bruker: "Slag Analysis by X-ray Fluorescence Spectrometry", , 18. September 2009 (2009-09-18), XP055381474, Gefunden im Internet: URL:https://www.bruker.com/fileadmin/user_ upload/8-PDF-Docs/X-rayDiffraction_Element alAnalysis/XRF/Webinars/Webinar_200809_-_S lag_Analysis_by_XRF_Spectrometry.pdf [gefunden am 2017-06-14]
- Siebtechnik: "Automatic milling and pressing system AMP", , 1. Juni 2013 (2013-06-01), XP055382013, Gefunden im Internet: URL:http://www.christianberner.se/$-1/file /leverantorer/siebtechnik/dokument/automat ic-milling-and-pressing-system-amp.pdf [gefunden am 2017-06-15]

## Beschreibung

Die Erfindung betrifft eine Vorrichtung und ein Verfahren zur Aufbereitung eines Probematerials, insbesondere Schlacke oder Erze, aus einem Mineral- oder Stahlherstellungsprozess.

Zur Überprüfung des Stahl- oder Mineralherstellungsprozesses werden üblicherweise an verschiedensten Stellen des Prozesses Proben von beispielsweise Schlacken oder Erzen entnommen und anschließend analysiert. Die entnommenen Materialproben werden zur anschließenden Analyse beispielsweise zu einer Tablette verpresst. Ein Verfahren zur Herstellung einer solchen Presstablette ist aus der DE 10 2013 106 998 A1 bekannt.

Zur quantitativen Bestimmung der elementaren Zusammensetzung solcher Materialproben werden häufig Verfahren wie beispielsweise Spektralanalyse, insbesondere Röntgenfluoreszenzanalyse eingesetzt. Solche nachfolgenden Analyseverfahren werden insbesondere durch sich in dem Probematerial befindende Eisenpartikel gestört, wobei diese die Messergebnisse verfälschen. Roheisen ist ein duktiler Werkstoff, der bei der Aufbereitung des Probematerials verformt oder nicht ausreichend fein gemahlen wird und daher eine anschließende Analyse erschwert.

Vorrichtungen zur Aufbereitung eines Probematerials sind beispielsweise auch in einer Brochüre der Firma Herzog Maschinenfabrik: "HP-MA / HP-PA Pulverizing Mill and Pellets Press in Modular Desing", einer Präsentation der Firma Bruker: "Slag Analysis by X-ray Flourescende Spectrometry" oder einer Brochüre der Firma Siebtechnik "Automatic milling and pressing system AMP" gezeigt. Des Weiteren zeigen auch die EP 1 052 500 A2, US 3 006 472 A, US 3 279 602 A, US 3 318 447 A Vorrichtungen zur Aufbereitung einer Probe, bei denen die oben genannten Nachteile auftreten können.

Es ist daher Aufgabe der vorliegenden Erfindung, eine Vorrichtung und ein Verfahren zur Aufbereitung eines Probematerials bereitzustellen, die eine Analyse der elementaren Zusammensetzung des Probematerials vereinfachen.

Diese Aufgabe wird erfindungsgemäß durch ein Verfahren mit den Merkmalen des unabhängigen Verfahrensanspruchs 1, sowie durch eine Vorrichtung mit den Merkmalen des unabhängigen Vorrichtungsanspruchs 12 gelöst. Vorteilhafte Weiterbildungen ergeben sich aus den abhängigen Ansprüchen.

Ein Verfahren zum Aufbereiten eines Probematerials, insbesondere Schlacke, Zement oder Erz, aus einem Mineral-, Zement- oder Stahlherstellungsprozess umfassend nach einem ersten Aspekt die folgenden Schritte:
a. Zerkleinern des Probematerials in einer Zerkleinerungseinrichtung,
b. Zuführen des Probematerials zu einer Presseinrichtung zum Pressen des Probematerials zu einer Tablette, wobei das Probematerial an einem Pressstempel der Presseinrichtung aufgenommen wird
c. Erzeugen eines Magnetfeldes und Magnetisieren von in dem Probematerial enthaltenen Eisenpartikeln mittels einer Magneteinrichtung, sodass sich die Eisenpartikel in einem der Magneteinrichtungen zugewandten Bereich innerhalb des Probematerials anlagern und
d. Pressen des Probematerials zu einer Tablette.

Unter Anlagern ist zu verstehen, dass sich die Konzentration an Eisenpartikeln in dem der Magneteinrichtung zugewandten Bereich erhöht. Beispielsweise lagern sich die Eisenpartikel direkt an der Magneteinrichtung an. Insbesondere lagern sich die Eisenpartikel ausschließlich in dem in einem der Magneteinrichtung zugewandten Bereich des Probematerials an, wobei in den übrigen Bereichen des Probematerials keine oder eine sehr geringe Konzentration an Eisenpartikeln vorhanden ist. Vorzugsweise ist der der Magneteinrichtung zugewandte Bereich ein Randbereich des Probematerials, wie beispielsweise ein Bereich der Oberfläche.

Bei dem Probematerial handelt es sich beispielsweise um Industrieschlacken, die insbesondere in einem Stahlherstellungsprozess. Das Probematerial umfasst des Weiteren beispielsweise Erze. Das Probematerial wird aus dem Herstellungsprozess entnommen und anschließend beispielsweise abgekühlt und der Zerkleinerungsvorrichtung zugeführt. Bei der Zerkleinerungsvorrichtung handelt es sich beispielswiese um eine Walzenmühle, eine Scheibenschwingmühle, eine Vertikalrollenmühle, eine Mühle, die nach dem elektromechanischen Zerkleinerungsprinzip arbeitet oder um einen Brecher. Im Anschluss an die Zerkleinerungseinrichtung wird das Probematerial zu der Presseinrichtung geleitet, wobei die Magneteinrichtung an der Presseinrichtung angeordnet ist.

Der Pressstempel ist in einem Gehäuse der Presseinrichtung angeordnet und relativ zu dem Gehäuse bewegbar. Das Probematerial wird vorzugsweise an einem Kopfbereich des Presstempels, der in Richtung des Einlasses in die Presseinrichtung weist, aufgenommen. Bei einer Bewegung des Pressstempels gegen eine Gegendruckplatte wird das Probematerial zu einer Tablette verpresst.

Die Magneteinrichtung ist derart ausgebildet, dass sie ein Magnetfeld erzeugt, das sich in das Probematerial erstreckt. Vorzugsweise ist das Magnetfeld derart ausgebildet, dass es metallische Eisenpartikel mit einer Größe von >5mm, vorzugsweise >lmm, insbesondere >100µm, höchstvorzugshalber kleiner als 100µm magnetisiert und in Richtung der Magneteinrichtung bewegt. Insbesondere ist die Magneteinrichtung deaktivierbar, sodass diese kein Magnetfeld erzeugt.

Eine solche Magneteinrichtung, mittels welcher ein Magnetfeld erzeugbar ist, ermöglicht eine Reduktion des Eisenanteils in dem Probematerial in dem Presswerkzeug. Dadurch wird die anschließende Analyse des Probematerials vereinfacht und zuverlässige Analyseergebnisse werden erreicht. In Abhängigkeit dieser Analyseergebnisse werden anschließend Parameter des Zement-, Erz- oder Stahlherstellungsprozesses falls erforderlich entsprechend geändert. Die Messfläche zur Analyse einer Presstablette ist üblicherweise mittig auf der Oberfläche der Presstablette, wobei die Tablette mit einer Eindringtiefe von etwa 50-100µm analysiert wird. Üblicherweise wird die von dem Pressstempel abgewandte Seite analysiert. In den Randbereichen der Presstablette abgelagertes Eisen hat daher keinen oder nur einen sehr geringen Einfluss auf das Messergebnis.

Vorzugsweise werden die Eisenpartikel wenigstens teilsweise aus dem Probematerial entfernt. Insbesondere werden die Eisenpartikel um Anschluss an den Schritt c aus dem Probematerial entfernt, wobei das Probematerial nach dem Entfernen der Eisenpartikel zu einer Tablette verpresst wird.

Gemäß einer ersten Ausführungsform umfasst der Schritt c. das Eintauchen der Magneteinrichtung in das Probematerial. Die Magneteinrichtung umfasst beispielsweise einen Stabmagneten, der in das auf dem Presstempel liegenden Probematerial eingetaucht wird. Die Eisenpartikel lagern sich an dem Stabmagneten an und werden zusammen mit diesem aus dem Probematrial entfernt. Anschließend wird das Probematerial mittels der Presseinrichtung zu einer Tablette gepresst.

Die Magneteinrichtung magnetisiert gemäß einer weiteren Ausführungsform den Pressstempel der Presseinrichtung und die Eisenpartikel des Probematerials lagern sich in dem dem Pressstempel zugewandten Randbereich des Probematerials an. Dazu ist die Magneteinrichtung beispielsweise zumindest teilweise um den Presstempel herum angeordnet. Insbesondere weist die Presseinrichtung ein Gehäuse auf und der Presstempel ist innerhalb des Gehäuses zwischen einer zurückgezogenen Position und einer Pressposition bewegbar angeordnet und wobei ein Ring und eine Gegendruckplatte vorgesehen sind, die mit dem Presstempel in der Pressposition zusammenwirken. Vorzugsweise werden der Pressstempel, der Ring und/ oder die Gegendruckplatte durch die Magneteinrichtung magnetisiert, wobei sich die Eisenpartikel innerhalb des Probematerials an einem Bereich anlagern, der dem Pressstempel, dem Ring und/ oder der Gegendruckplatte zugewandt ist.

Gemäß einer weiteren Ausführungsform wird die Magneteinrichtung vor dem Schritt c. von einer Position außerhalb der Presseinrichtung in eine Position innerhalb der Presseinrichtung bewegt. Der Zerkleinerungseinrichtung ist gemäß einer weiteren Ausführungsform eine Leitung zum Leiten des Probematerials nachgeschaltet, wobei eine weitere Magneteinrichtung an der Leitung angebracht und wobei das Probematerial im Anschluss an die Zerkleinerungseinrichtung durch die Leitung geleitet wird und sich die Eisenpartikel des Probematerials an einem Wandbereich der Leitung anlagern. Die weitere Magneteinrichtung ist insbesondere derart ausgebildet, dass sie ein Magnetfeld innerhalb der Leitung erzeugt. Dies ermöglicht ein Abscheiden der Eisenpartikel aus dem Probematerial vor dem Eintreten des Probematerials in die Presseinrichtung.

Die weitere Magneteinrichtung wird gemäß einer weiteren Ausführungsform im Anschluss an die Anlagerung des Probematerials an dem Wandbereich der Leitung deaktiviert, sodass diese kein Magnetfeld erzeugt. Die an dem Wandbereich angelagerten Eisenpartikel werden vorzugsweise aus der Leitung und dem Probematerial entfernt. Beispielsweise lösen sich die angelagerten Eisenpartikel von der Leitung und können abgesaugt werden

Gemäß einer weiteren Ausführungsform werden die Magneteinrichtung, die Presseinrichtung und / oder die Leitung und insbesondere das Probenmaterial vibriert. Dies sorgt für eine bessere Abscheidung der Eisenpartikel aus dem Probematerial.

Die Zerkleinerungseinrichtung umfasst gemäß einer weiteren Ausführungsform eine Brecheinrichtung und/ oder eine Mahleinrichtung und wobei der Brecheinrichtung und/ oder der Mahleinrichtung jeweils eine Leitung zum Leiten des Probematerials nachgeschaltet ist mit einer weiteren Magneteinrichtung und wobei das Probematerial im Anschluss an die Mahleinrichtung und/ oder die Brecheinrichtung durch die Leitung geleitet wird und die Eisenpartikel aus dem Probematerial entfernt werden. Beispielsweise ist eine Brecheinrichtung mit einer nachgeschalteten Mahleinrichtung vorgesehen, wobei die Brecheinrichtung und die Mahleinrichtung miteinander verbunden sind, sodass Probematerial von der Brecheinrichtung zu der Mahleinrichtung geleitet wird.

Verfahren nach eine der vorangehenden Ansprüche, wobei das Probematerial im Anschluss an den Schritt c. mittels einer RFA und/ oder einer RDA Analyse analysiert wird. Unter einer RDA Analyse ist eine Röntgendiffraktometrie zu verstehen, wobei RFA eine Röntgenfluoreszenzanalyse beschreibt. RDA dient beispielsweise zusätzlich zum Optimieren und/ oder zur Einstellung der Magneteinrichtung, sodass diese eine optimal Magnetkraft aufweist. Es ist beispielsweise denkbar, dass die Eigenschaften der Magneteinrichtung, wie beispielsweise die Stromstärke und/ oder die Magnetkraft, in Abhängigkeit des mittels der RDA ermittelten Roheisengehalts in der Materialprobe eingestellt wird.

Die Erfindung umfasst des Weiteren eine Vorrichtung zur Aufbereitung eines Probematerials, insbesondere Schlacke, oder Erz, aus einem Mineral-, oder Stahlherstellungsprozess, aufweisend zumindest eine Zerkleinerungseinrichtung zur Zerkleinerung des Probematerials, wobei der Zerkleinerungseinrichtung eine Presseinrichtung zum Pressen des Probematerials, insbesondere zu einer Tablette, nachgeschaltet ist und die Presseinrichtung einen Presstempel zur Aufnahme des Probematerials aufweist, wobei die Presseinrichtung ein Gehäuse aufweist und der Presstempel innerhalb des Gehäuses zwischen einer zurückgezogenen Position und einer Pressposition bewegbar angeordnet ist und wobei ein Ring und eine Gegendruckplatte vorgesehen sind, die mit dem Presstempel in der Pressposition zusammenwirken. Des Weiteren weist die Vorrichtung eine Magneteinrichtung auf, die derart angeordnet ist, dass in dem Probematerial enthaltene Eisenpartikel, der Presstempel und/oder der Ring oder die Gegendruckplatte und/ oder der Ring durch die Magneteinrichtung magnetisierbar sind, sodass sich die Eisenpartikel in einem Randbereich innerhalb des Probematerials anlagern.

Der Ring ist insbesondere aus Stahl ausgebildet und an dem Einlassbereich der Presseinrichtung angeordnet. Vorzugsweise liegt der Ring auf dem Gehäuse im Bereich des Einlasses auf. Vor dem Pressvorgang wird der Ring auf dem Gehäuse positioniert und bildet zusammen mit dem Pressstempel und der Gegendruckplatte die Pressform der Tablette. Der Ring beabstandet vorzugsweise das Gehäuse der Presseinrichtung von einer Gegendruckplatte, gegen welche sich der Pressstempel bewegt, um das Probematerial zu einer Tablette zu verpressen. Bei einem Pressvorgang wird der Pressstempel beispielsweise mittels einer hydraulischen oder mechanischen Hubvorrichtung in Richtung der Gegendruckplatte relativ zu dem Gehäuse bewegt.

Eine Magnetisierung des Pressstempels, des Rings, der Gegendruckplatte oder Kombinationen von diesen bewirkt eine Verschiebung der Eisenpartikel innerhalb des Probematerials in Richtung des magnetisierten Elements. Die Eisenpartikel werden beispielsweise durch einen magnetisierten Presstempel in Richtung des Pressstempels bewegt und lagern sich an einem Randbereich, vorzugsweise dem Pressstempel zugewandten Bereich, an. Bei dem Verpressen des Probenmaterials zu einer Presstablette verbleiben die Eisenpartikel in dem Randbereich der Tablette, insbesondere dem Pressstempel zugewandten Bereich, was eine anschließende Analyse des Probematerials erheblich vereinfacht, da die Messfläche üblicherweise mittig, beispielsweise mit einem Durchmesser von bis zu 30mm, auf der Oberfläche der Presstablette ist und die Probe mit einer Eindringtiefe von etwa 50-100µm analysiert wird. Üblicherweise wird die von dem Pressstempel abgewandte Seite analysiert. In den Randbereichen der Presstablette abgelagertes Eisen hat daher keinen oder nur einen sehr geringen Einfluss auf das Messergebnis.

Die mit Bezug auf das Verfahren zum Aufbereiten eines Probematerials beschriebenen Vorteile und Erläuterungen treffen in vorrichtungsmäßiger Entsprechung auch auf die Vorrichtung zur Aufbereitung eines Probematerials zu.

Die Magneteinrichtung umfasst gemäß einer Ausführungsform einen Permanentmagneten oder einen Elektromagneten. Vorzugsweise umfasst die Magneteinrichtung eine Mehrzahl von Permanentmagneten und/oder Elektromagneten, die beispielswiese ringförmig und/oder segmentförmig angeordnet sind. Ein Elektromagnet weist zumindest eine Spule mit einer Mehrzahl von Windungen auf. Die Feldstärke des Magnetfeldes ist insbesondere über die Stromstärke einstellbar. Bei einem Permanentmagneten ist die Feldstärke des Magnetfeldes an dem Probematerial beispielsweise über den Abstand der Magneteinrichtung zu dem Probematerial einstellbar. Vorzugsweise ist die Magneteinrichtung zwischen einer Position außerhalb der Presseinrichtung und einer Position innerhalb der Presseinrichtung, in welcher die Magneteinrichtung mit dem Probematerial in Verbindung steht, bewegbar angebracht. Insbesondere wird die Magneteinrichtung in das Probematerial eingetaucht, wobei die Eisenpartikel des Probematerials magnetisiert werden. In der Position außerhalb der Presseinrichtung wirkt die Magneteinrichtung nicht derart mit dem Probematerial zusammen, dass eine Magnetisierung der Eisenpartikel erfolgt. Vorzugsweise wird die Magneteinrichtung in Richtung des Kopfbereichs des Pressstempels und relativ zu diesem bewegbar angebracht.

Gemäß einer weiteren Ausführungsform ist die Magneteinrichtung in dem Gehäuse oder an der Gegendruckplatte angeordnet. Eine in dem Gehäuse angeordnete Magneteinrichtung ist vorzugsweise derart angeordnet, dass sie den Pressstempel und/ oder den Ring magnetisiert. Die Magneteinrichtung ist innerhalb des Gehäuses der Presseinrichtung vorzugsweise auf der Höhe des Presstempels angebracht. Eine an der Gegendruckplatte angebrachte Magneteinrichtung magnetisiert vorzugsweise die Gegendruckplatte und / oder den Ring.

Der Zerkleinerungseinrichtung ist gemäß einer weiteren Ausführungsform eine Leitung zum Leiten des Probematerials nachgeschaltet, wobei eine weitere Magneteinrichtung an der Leitung angebracht ist. Vorzugsweise ist die weitere Magneteinrichtung am äußeren Umfang der Leitung angebracht. Die Leitung umfasst vorzugsweise ein Material, das für ein Magnetfeld durchlässig ist, wie beispielsweise Silikon. Insbesondere ist ausschließlich ein Teilbereich der Leitung aus einem für ein Magnetfeld durchlässigen Material ausgebildet, wobei die Magneteinrichtung an diesem Teilbereich angebracht ist. Insbesondere ist die Magneteinrichtung derart an der Leitung angebracht, dass sie einen Teilbereich der Leitung ausbildet. Die Magneteinrichtung ist dazu beispielsweise rohrförmig ausgebildet. Eine Magneteinrichtung an einer der Zerkleinerungseinrichtung nachgeschalteten Leitung ermöglicht eine Abscheidung der Eisenpartikel aus dem Probematerial unmittelbar im Anschluss an die Zerkleinerung und vor dem Eintritt des Materials in die Presseinrichtung.

Die Magneteinrichtung ist insbesondere konzentrisch, um die Leitung herum angeordnet. Eine konzentrische Anordnung der Magneteinrichtung um die Leitung herum bewirkt eine Bewegung der Eisenpartikel in Richtung der Innenwand der Leitung, sodass diese dort gehalten werden. Dies ermöglicht eine zuverlässige Separation der Eisenpartikel aus dem Probematerial. Das Magnetfeld der Magneteinrichtung ist vorzugsweise derart ausgebildet, dass die Eisenpartikel gegen die Strömung des Probematerials an der Innenwand der Leitung gehalten und von dem Probematerial separiert werden.

Beispielsweise ist die Magneteinrichtung ringförmig ausgebildet. Die ringförmige Magneteinrichtung ist beispielsweise um die Leitung oder den Pressstempel der Presseinrichtung angeordnet. Vorzugsweise weist die Magneteinrichtung eine Mehrzahl von Magnetsegmenten auf, die zu einem Ring angeordnet sind. Beispielsweise umfasst die Magneteinrichtung zwei halbringförmige Segmente. Die Magneteinrichtung umfasst beispielsweise einen Elektromagneten mit zumindest einer Spule, die eine in Strömungsrichtung des Probematerials zunehmende Windungszahl aufweist. Die zunehmende Windungszahl erzeugt ein in Richtung der Strömungsrichtung des Probematerials in der Stärke ansteigendes Magnetfeld, wobei eine Separation der Eisenpartikel aus dem Probematerial zuverlässig erreicht wird. Vorzugsweise ist der Elektromagnet mit der Spule, die eine in Strömungsrichtung des Probematerials zunehmende Windungszahl aufweist, um die Leitung herum angeordnet. Insbesondere ist die magnetische Gradientenkraft des Magnetfeldes der Magneteinrichtung einstellbar. Eine Einstellbarkeit der Gradientenkraft ermöglicht eine Ausrichtung der Bewegung der Eisenpartikel. Zusätzlich ist es möglich, die Gradientenkraft derart einzustellen, dass lediglich Eisenpartikel unterhalb einer gewünschten Größe bewegt oder von dem Probematerial separiert werden. Der Grad der Separation ist daher genau einstellbar, beispielsweise werden lediglich die Roheisenpartikel aus dem Probematerial bewegt, wobei weitere magnetische Partikel, wie Magnetit in dem Probematerial verbleiben.

Vorzugsweise ist zumindest teilweise um die Magneteinrichtung herum zumindest ein Abschirmelement zum Abschirmen der Umgebung gegen das Magnetfeld der Magneteinrichtung angeordnet. Das Abschirmelement dient insbesondere der Reduzierung der Streufelder des Magnetfeldes und sorgt für einen magnetischen Rückschluss. Das Abschirmelement weist insbesondere ein elektrisch leitfähiges Schirmmaterial auf, wie beispielsweise Blech. Vorzugsweise ist das Abschirmelement ringförmig ausgebildet und weist an den Ringbereichen einen u-förmigen Querschnitt auf, der die Magneteinrichtung zumindest teilweise umgibt. Das Abschirmelement ist zumindest teilweise um den Permanentmagneten oder den Elektromagneten herum angeordnet und verhindert eine Wechselwirkung des Magnetfeldes mit in der Umgebung der Magneteinrichtung angeordneten insbesondere ferromagnetischen Bauteilen. Insbesondere ist das Gehäuse als Abschirmelement ausgebildet und weist ein elektrisch leitfähiges Schirmmaterial auf. Das Abschirmelement weist vorzugsweise eine Schalenform auf, wobei die Magneteinrichtung innerhalb der Schale angeordnet ist.

Die Leitung ist gemäß einer weiteren Ausführungsform zwischen der Zerkleinerungseinrichtung und der Presseinrichtung angebracht ist, sodass Probematerial durch die Leitung von der Zerkleinerungseinrichtung zu der Presseinrichtung geleitet wird.

Die Magneteinrichtung ist gemäß einer weiteren Ausführungsform relativ zu der Presseinrichtung und/ oder der Leitung bewegbar angebracht. Beispielsweise ist die Magneteinrichtung schwenkbar angebracht. Vorzugsweise ist die Magneteinrichtung von einer Position, in welcher Eisenpartikel durch das mittels der Magneteinrichtung erzeugte Magnetfeld magnetisierbar sind, in eine Position bewegbar, in welcher die Eisenpartikel des Probematerials nicht mittels des Magnetfeldes der Magneteinrichtung magnetisierbar sind.

Gemäß einer weiteren Ausführungsform ist eine Vibrationseinrichtung zum Vibrieren der Magneteinrichtung, der Leitung und / oder des Pressstempels vorgesehen. Eine Vibration des Pressstempels bewirkt eine Vibration des darauf gelagerten Probematerials, wodurch dieses durchmischt wird. Dadurch wird eine zuverlässige Magnetisierung der Eisenpartikel in dem Probematerial mittels der Magneteinrichtung erreicht. Eine Vibration der Magneteinrichtung und / oder der Leitung bewirkt insbesondere nach der Deaktivierung der Magneteinrichtung, ein Lösen der Eisenpartikel von der Magneteinrichtung und/ oder der Leitung, sodass diese gereinigt werden. Eine Vibration der Leitung beim Durchströmen des Probematerials ermöglicht ferner eine effizientere Trennung der Eisenpartikel aus dem Probematerial.

Gemäß einer weiteren Ausführungsform weist die Zerkleinerungseinrichtung eine Mahleinrichtung und/ oder eine Brecheinrichtung auf und jeder der Mahleinrichtung und/ oder der Brecheinrichtung jeweils eine Leitung zum Leiten des Probematerials nachgeschaltet ist, an der jeweils eine Magneteinrichtung angebracht ist. Dies ermöglicht eine Abscheidung eines Großteils der Eisenpartikel vor dem Eintritt des Materials in die Presseinrichtung.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung einer Vorrichtung zur Aufbereitung eines Probematerials gemäß einem Ausführungsbeispiel.
Fig. 2 zeigt eine schematische Darstellung einer Leitung mit einer Magneteinrichtung in einer Schnittansicht gemäß einem weiteren Ausführungsbeispiel.
Fig. 3 zeigt eine schematische Darstellung einer Presseinrichtung mit einer Magneteinrichtung in einer Schnittansicht gemäß einem weiteren Ausführungsbeispiel.
Fig. 4 zeigt eine schematische Darstellung einer Presseinrichtung mit einer Magneteinrichtung in einer Schnittansicht gemäß einem weiteren Ausführungsbeispiel.

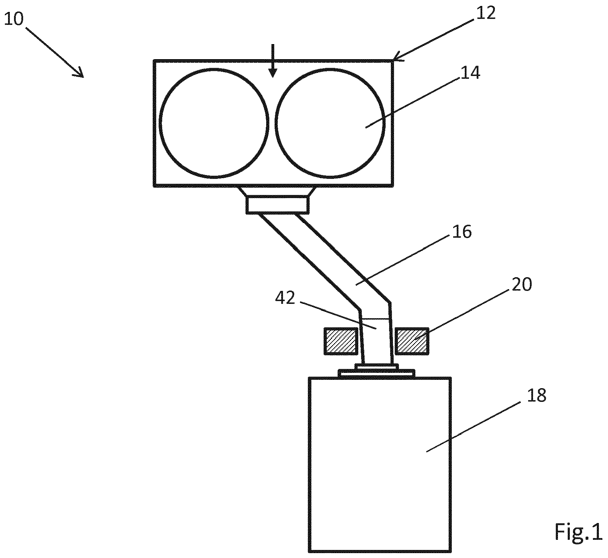

Fig. 1 zeigt eine Vorrichtung 10 zur Aufbereitung eines Probematerials. Bei dem Probematerial handelt es sich beispielsweise um Erze oder Schlacke, die aus einem Mineral- oder Stahlherstellungsprozess entnommen wurden. Die Vorrichtung 10 umfasst eine Zerkleinerungseinrichtung 12 zum Zerkleinern des Probematerials. Die Zerkleinerungseinrichtung 12 ist in dem in Fig. 1 dargestellten Ausführungsbeispiel eine Walzenmühle mit zwei gegenläufig rotierenden Mahlwalzen 14, die einen Mahlspalt zum Mahlen des Probematerials ausbilden. Bei der Zerkleinerungseinrichtung 12 kann es sich auch um eine Brecheinrichtung mit einer der Brecheinrichtung nachgeschalteten Mahleinrichtung handeln. Die Brecheinrichtung und die Mahleinrichtung sind beispielsweise mit einer Leitung zum Leiten des Probematerials miteinander verbunden.

An die Zerkleinerungseinrichtung 12 schließt sich unterhalb des Mahlspaltes eine Leitung 16 an, die das gemahlene Probematerial zu einer Presseinrichtung 18 leitet. Die Leitung 16 ist beispielsweise rohrförmig ausgebildet und umfasst zumindest einen Teilabschnitt aus einem magnetfelddurchlässigen Material wie beispielsweise Silikon, PVC, Keramik oder Aluminium.

Die Leitung 16 weist beispielhaft einen im Wesentlichen vertikal verlaufenden unteren Teilbereich 42 auf, der einen Einlass zu der Presseinrichtung 18 ausbildet. Der Teilbereich 42 ist beispielhaft zumindest teilweise von einer Magneteinrichtung 20 umgeben. Die Magneteinrichtung 20 ist in dem Ausführungsbeispiel der Fig. 1 ringförmig ausgebildet und um die Leitung 16 herum angeordnet. Beispielsweise umfasst die Magneteinrichtungen 20 einen Permanentmagneten, der relativ zu der Leitung 16 bewegbar angebracht ist, oder einen Elektromagneten, der ein- und ausschaltbar ist und dessen Magnetfeldstärke einstellbar ist. Mittels der Magneteinrichtung 20 ist ein Magnetfeld erzeugbar, das sich innerhalb der Leitung 16 erstreckt und mit den in dem Probematerial vorhandenen Eisenpartikeln zusammenwirkt, sodass diese magnetisiert werden. Es ist ebenfalls denkbar, keine Magneteinrichtung an der Leitung 16 anzuordnen.

Im Betrieb der Vorrichtung 10 zur Aufbereitung eines Probematerials wird aus einem Mineral- oder Stahlherstellungsprozess entnommenes Probematerial in Pfeilrichtung der Fig. 1 in die Zerkleinerungseinrichtung 12 aufgegeben und in dieser zerkleinert. Insbesondere wird das Probematerial nicht kontinuierlich dem Mineral- oder Stahlherstellungsprozess entnommen, sondern batchweise der Zerkleinerungseinrichtung 12 in einer Menge von etwa 1 - 5 kg, vorzugsweise 200- 500g, insbesondere 25-30g zugeführt. Im Anschluss an die Zerkleinerungseinrichtung 12 wird das Probematerial vorzugweise schwerkraftbedingt durch die Leitung 16 von der Zerkleinerungseinrichtung 12 zu der Presseinrichtung 18 geleitet. In dem im Wesentlichen vertikal verlaufenden Teilabschnitt 42 der Leitung werden die Eisenpartikel des Probematerials mittels der Magneteinrichtung 20 magnetisiert und bewegen sich in Richtung der Magneteinrichtung 20 radial nach außen zu der Innenwand der Leitung 16. Das mittels der Magneteinrichtung 20 erzeugte Magnetfeld ist vorzugsweise derart ausgebildet, dass die Eisenpartikel des Probematerials an der Innenwand der Leitung 16 gegen die Strömung des Probematerials gehalten werden. Das restliche, keinen oder nur einen geringen Anteil an Eisen enthaltende Probematerial wird zu der Presseinrichtung 18 geleitet und dort beispielswiese zu einer Tablette verpresst. Es ist ebenfalls denkbar, das restliche, keinen oder nur einen geringen Anteil an Eisen enthaltende Probematerial, nicht wie in Fig. 1 dargestellt, in eine Presseinrichtung, sondern beispielsweise in einen Auffangbehälter zum Analysieren des unverpressten Probematerials zu leiten. Im Anschluss an das Strömen des Probematerials durch die Leitung 16 wird die Magneteinrichtung 20 deaktiviert, sodass kein Magnetfeld erzeugt wird. Die Eisenpartikel werden entmagnetisiert und fallen beispielsweise schwerkraftbedingt durch die Leitung 16. Es ist ebenfalls denkbar, nach der Deaktivierung der Magneteinrichtung die an der Innenwand der Leitung 16 anhaftenden Eisenpartikel abzusaugen oder abzuschütteln, sodass die Leitung 16 von den Eisenpartikeln gereinigt und eine Verstopfung der Leitung verhindert wird.

Unter der Deaktivierung der Magneteinrichtung ist beispielsweise zu verstehen, dass bei einer einen Elektromagneten umfassenden Magneteinrichtung 20 der Elektromagnet ausgeschaltet wird, sodass kein Magnetfeld erzeugt wird. Bei einer einen Permanentmagneten umfassenden Magneteinrichtung 20 wird unter der Deaktivierung verstanden, dass der Permanentmagnet von der Leitung 16 wegbewegt wird, sodass das Magnetfeld des Permanentmagneten nicht mit dem Inneren der Leitung und den an der Innenwand der Leitung anhaftenden Eisenpartikel zusammenwirkt.

Das von der Magneteinrichtung 20 erzeugte Magnetfeld ist insbesondere derart ausgebildet, dass es metallische Eisenpartikel mit einer Größe von >5mm, vorzugsweise >lmm, insbesondere >100µm (auch <100µm) magnetisiert und entgegen der Strömung des Probematerials an der Innenwand der Leitung 16 hält.

Die Magneteinrichtung 20 ist in dem Ausführungsbeispiel der Fig. 1 lediglich beispielhaft an der Leitung 16 im Anschluss an die Zerkleinerungseinrichtung 12 angeordnet. Es ist ebenfalls denkbar, das Probematerial ohne Separation der Eisenpartikel in die Presseinrichtung zu leiten. Des Weiteren ist es denkbar, dass die Zerkleinerungseinrichtung 12 eine nicht dargestellte Brecheinrichtung und eine Mahleinrichtung umfasst und im Anschluss an die Brecheinrichtung und/ oder die Mahleinrichtung jeweils eine Leitung 16 mit einer voran beschriebenen Magneteinrichtung zur Separation der Eisenpartikel aus dem Probematerial angeordnet ist, sodass vor dem Eintritt des Probematerials in die Presseinrichtung 18 zumindest ein Teil der Eisenpartikel aus dem Probematerial ausgeschieden wird.

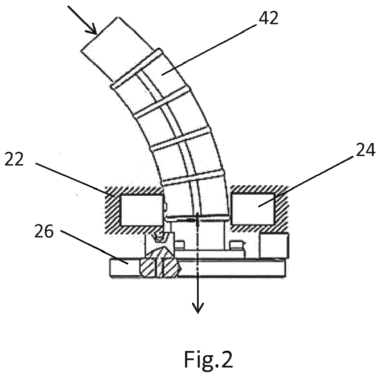

Fig. 2 zeigt einen Teilabschnitt 42 der Leitung 16 mit einer Magneteinrichtung 20. Der Teilabschnitt 42 umfasst den auslassseitigen Abschnitt der Leitung 16, an den sich beispielsweise die Presseinrichtung 18 oder ein Auffangbehälter anschließt. Die Magneteinrichtung 20 ist um einen im Wesentlichen vertikal verlaufenden Bereich des Teilabschnitts 42 angeordnet und ringförmig ausgebildet. Die Magneteinrichtung 20 umfasst in Fig. 2 beispielhaft einen Elektromagneten 24, der eine Mehrzahl von nicht dargestellten Spulen aufweist. Des Weiteren ist teilweise um die Magneteinrichtung 20 herum ein Abschirmelement 22 angeordnet, das ein elektrisch leitfähiges Schirmmaterial aufweist, wie beispielsweise Blech, oder FE-Co Legierung (VACOFLUX) für die DC Anwendung.

Das Abschirmelement 22 ist um die Bereiche des Elektromagneten 24 angeordnet, die von der Leitung 16 wegweisen und ist in dem Ausführungsbeispiel der Fig. 1 ringförmig ausgebildet, wobei es in dem Ringbereich einen U-förmigen Querschnitt aufweist. Dadurch wird sichergestellt, dass sich das Magnetfeld lediglich in die Leitung 16 erstreckt und eine magnetische Wechselwirkung mit sich in der Nähe der Leitung befindenden ferromagnetischen Bauteilen wird vermieden.

Der Elektromagnet 24 weist zumindest eine oder eine Mehrzahl von Spulen auf, deren Windungszahl in Strömungsrichtung des Probematerials zunimmt, sodass die Magnetfeldstärke, insbesondere der Gradient in der magnetischen Flussdichteverteilung radial nach außen und in Strömungsrichtung des Probematerials, insbesondere entgegen der Schwerkraft, zunimmt. Die Magnetfeldstärke und der Gradient in der magnetischen Flussdichteverteilung sind bei dem Elektromagneten einstellbar, sodass Eisenpartikel je nach gewünschter Größe aus dem Probematerial entfernbar sind. Es ist ebenfalls denkbar, um die Leitung 16 herum einen Permanentmagneten anzuordnen.

Eine solche in Fig. 2 dargestellte Leitung 16 mit einer Magneteinrichtung ist beispielsweise im Anschluss an eine Zerkleinerungseinrichtung 12, zwischen einer Brecheinrichtung und einer Mahleinrichtung und/ oder am Materialeinlass der Presseinrichtung 18 angeordnet. Eine Mahleinrichtung oder ein Brecher mit einer im Anschluss daran angeordneten Leitung 16 mit der Magneteinrichtung 20 weist beispielsweise ein Bodenauslassventil auf, an das sich die Leitung 16 anschließt.

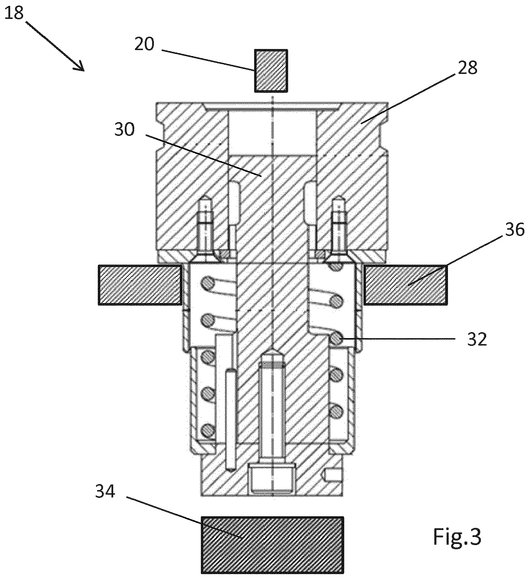

Fig. 3 zeigt eine Presseinrichtung 18 mit einer Magneteinrichtung 20. Die Presseinrichtung 18 weist ein Gehäuse 28 auf, in dem ein Pressstempel 30 bewegbar angebracht ist. Der Pressstempel 30 ist in Längsrichtung des Gehäuses 28 entlang der Gehäuseinnenwand verschiebbar angebracht. An dem dem Einlass der Presseinrichtung 18 zugewandten Kopfbereich des Presstempels 30 ist eine Aufnahmebereich für ein Probematerial ausgebildet.

Das Gehäuse 28 der Presseinrichtung 18 ist an einer Aufnahme 36 befestigt. Der Pressstempel 30 ist an dem, dem Einlass der Presseinrichtung 18 abgewandten Ende, mit einer Feder 32 verbunden, die den Presstempel 30 in die in Fig. 3 dargestellte zurückgezogene Stellung beaufschlagt. Der Presstempel 30 ist zwischen der zurückgezogenen Position und einer Pressposition bewegbar. In der Pressposition ist der Pressstempel 30 in Längsrichtung des Gehäuses 28 und relativ zu dem Gehäuse 28 nach oben verschoben und schließt beispielsweise mit dem Einlassbereich der Presseinrichtung 18 ab. Unterhalb der Presseinrichtung 18 ist schematisch eine Hubeinrichtung 34 dargestellt, die von unten gegen den Presstempel 30 entgegen der Kraft der Feder 32 drückt und den Presstempel 30 von der zurückgezogenen Position in die Pressposition bewegt.

Oberhalb des Presstempels 30 ist schematisch eine Magneteinrichtung 20 dargestellt. Die Magneteinrichtung 20 umfasst beispielsweise einen Elektromagneten oder einen Permanentmagneten und ist relativ zu dem Gehäuse 28 und dem Presstempel 30 bewegbar angeordnet.

Zum Pressen eines Probematerials zu einer Presstablette wird das Probematerial in den Aufnahmebereich auf den Presstempel 30 geleitet. Im Anschluss daran wird die Magneteinrichtung 20 in das Gehäuse 28 der Presseinrichtung 18 zu dem Probematerial bewegt, sodass das von der Magneteinrichtung 20 erzeugte Magnetfeld mit dem Probematerial zusammenwirkt und die Eisenpartikel innerhalb des Probematerials magnetisiert werden. Die Eisenpartikel werden von der Magneteinrichtung 20 angezogen und bleiben an dieser haften. Das von der Magneteinrichtung 20 erzeugte Magnetfeld ist insbesondere derart ausgebildet, dass es metallische Eisenpartikel mit einer Größe von >5mm, vorzugsweise >lmm, insbesondere >100µm (auch <100µm) magnetisiert und diese an der Magneteinrichtung anhaften. Anschließend wird die Magneteinrichtung 20 mit den an dieser anhaftenden Eisenpartikel von der Presseinrichtung 18 weg bewegt. Das restliche Probematerial, das keinen oder einen geringen Eisenanteil enthält, wird anschließend zu einer Presstablette verpresst.

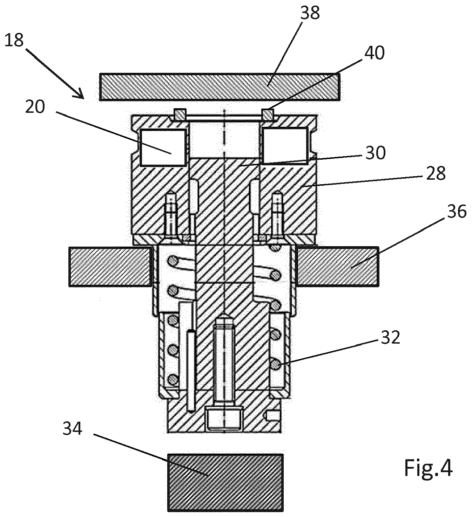

Fig. 4 zeigt eine Presseinrichtung 18, die der Presseinrichtung 18 der Fig. 3 entspricht, mit dem Unterschied, dass in dem Gehäuse 28 der Presseinrichtung 18 die Magneteinrichtung 20 angeordnet ist. Zusätzlich ist ein Ring 40 vorgesehen, der um den Einlassbereich der Presseinrichtung angeordnet ist. Oberhalb der Presseinrichtung 18 ist eine schematisch dargestellte Gegendruckplatte 38 angeordnet. Die Magneteinrichtung 20 weist beispielsweise einen Permanentmagneten oder einen Elektromagneten auf. Insbesondere ist zumindest teilweise um die Magneteinrichtung 20 herum ein nicht dargestelltes Abschirmelement angeordnet, das im Wesentlichen dem Abschirmelement 22 der Fig. 2 entspricht.

Die Magneteinrichtung 20 ist ringförmig ausgebildet und in der zurückgezogenen Position des Pressstempels 30 um den Aufnahmebereich an dem Kopf des Presstempels angeordnet. In der Pressposition des Pressstempels 30 ist die Magneteinrichtung derart angeordnet, dass der Kopf des Presstempels 30, insbesondere der Bereich, auf dem das Probematerial aufgenommen wird, magnetisiert wird, sodass die sich in dem Probematerial befindenden Eisenpartikel in Richtung des Presstempels 30 bewegt werden und sich in dem unteren dem Pressstempel 30 zugewandten Bereich des Probematerials anlagern. Das von der Magneteinrichtung 20 erzeugte Magnetfeld ist insbesondere derart ausgebildet, dass es metallische Eisenpartikel mit einer Größe von >5mm, vorzugsweise >lmm, insbesondere >100µm (auch <100µm) magnetisiert und sich diese an dem unteren dem Presstempel 30 zugewandten Randbereich des Probematerials ablagern. Die Stärke des Magnetfeldes der Magneteinrichtung 20 ist vorzugsweise einstellbar. Das Probematerial wird im Anschluss an die Verschiebung der Eisenpartikel innerhalb des Probematerials zu einer Tablette verpresst. Dabei wird der Pressstempel in Richtung der Gegendruckplatte 38 bewegt, sodass das Probematerial zwischen dem Aufnahmebereich an dem Kopf des Presstempels 30, dem Ring 40 und der Gegendruckplatte 38 verpresst wird.

Es ist ebenfalls denkbar, die Magneteinrichtung 20 derart anzuordnen, dass diese die Gegendruckplatte 38, insbesondere im Bereich der Kontaktfläche des Stahlringes, und/ oder den Ring 40 magnetisiert. Die Eisenpartikel des Probematerials werden in Richtung der magnetisierten Gegendruckplatte 38 und/ oder in Richtung des magnetisierten Rings 40 verschoben, sodass sich diese in den Randbereichen des Probematerials ablagern. Die verpresste Tablette weist somit lediglich in den Randbereichen der Tablette oben, unten oder ringförmig an den Seitenbereichen der Tablette Eisenpartikel auf. Diese beeinflussen an diesen Positionen die folgenden Analyseverfahren, die mit der Presstablette durchgeführt werden, nicht.

### Bezugszeichenliste

- 10: Vorrichtung zur Aufbereitung eines Probematerials
- 12: Zerkleinerungseinrichtung
- 14: Mahlwalzen
- 16: Leitung
- 18: Presseinrichtung
- 20: Magneteinrichtung
- 22: Abschirmelement
- 24: Elektromagnet
- 26: Aufnahmeplatte
- 28: Gehäuse
- 30: Presstempel
- 32: Feder
- 34: Hubeinrichtung
- 36: Aufnahme
- 38: Gegendruckplatte
- 40: Ring
- 42: Teilbereich der Leitung

## Patentansprüche

1. Verfahren zum Aufbereiten eines Probematerials, insbesondere Schlacke oder Erz, aus einem Mineral- oder Stahlherstellungsprozess umfassend die folgenden Schritte:
a. Zerkleinern des Probematerials in einer Zerkleinerungseinrichtung (12),
b. Zuführen des Probematerials zu einer Presseinrichtung (18) zum Pressen des Probematerials zu einer Tablette, wobei das Probematerial an einem Pressstempel (30) der Presseinrichtung (18) aufgenommen wird,
c. Erzeugen eines Magnetfeldes und Magnetisieren von Eisenpartikeln des Probematerials in dem Pressstempel mittels einer Magneteinrichtung, sodass sich die Eisenpartikel in einem der Magneteinrichtungen zugewandten Bereich innerhalb des in dem Pressstempel angeordneten Probematerials anlagern
d. Pressen des Probematerials zu einer Tablette.

2. Verfahren nach einem der vorangehenden Ansprüche, wobei der Schritt c. das Eintauchen der Magneteinrichtung in das Probematerial umfasst.

3. Verfahren nach einem der vorangehenden Ansprüche, wobei der Pressstempel (30) der Presseinrichtung (18) durch die die Magneteinrichtung (20) magnetisiert wird und die Eisenpartikel des Probematerials sich in dem dem Pressstempel (30) zugewandten Randbereich des Probematerials anlagern.

4. Verfahren nach einem der vorangehenden Ansprüche, wobei die Magneteinrichtung (20) vor dem Schritt c. von einer Position außerhalb der Presseinrichtung (18) in eine Position innerhalb der Presseinrichtung (18) bewegt wird.

5. Verfahren nach einem der vorangehenden Ansprüche, wobei der Zerkleinerungseinrichtung (12) eine Leitung (16) zum Leiten des Probematerials nachgeschaltet ist und eine weitere Magneteinrichtung (20) an der Leitung (16) angebracht ist und wobei das Verfahren die Schritte aufweist:
Leiten des Probematerials im Anschluss an die Zerkleinerungseinrichtung (12) durch die Leitung und Anlagern der Eisenpartikel des Probematerials an einem Wandbereich der Leitung (16).

6. Verfahren nach einem der vorangehenden Ansprüche, wobei die Magneteinrichtung (20), die Presseinrichtung (18) und / oder die Leitung (16) und insbesondere das Probenmaterial vibriert werden.

7. Verfahren nach einem der vorangehenden Ansprüche, wobei die Zerkleinerungseinrichtung eine Brecheinrichtung und/ oder eine Mahleinrichtung umfasst und wobei der Brecheinrichtung und/ oder der Mahleinrichtung jeweils eine Leitung (16) zum Leiten des Probematerials mit einer weiteren Magneteinrichtung (20) nachgeschaltet ist und wobei das Probematerial im Anschluss an die Mahleinrichtung und/ oder die Brecheinrichtung durch die Leitung geleitet wird und die Eisenpartikel aus dem Probematerial entfernt werden.

8. Verfahren nach eine der vorangehenden Ansprüche, wobei das Probematerial im Anschluss an den Schritt c. mittels einer RFA und/ oder einer RDA Analyse analysiert wird.

9. Vorrichtung (10) zur Aufbereitung eines Probematerials, insbesondere Schlacke oder Erz, aus einem Mineral - oder Stahlherstellungsprozess, aufweisend:
zumindest eine Zerkleinerungseinrichtung (12) zur Zerkleinerung des Probematerials, wobei der Zerkleinerungseinrichtung (12) eine Presseinrichtung (18) zum Pressen des Probematerials, insbesondere zu einer Tablette, nachgeschaltet ist und die Presseinrichtung (18) einen Presstempel (30) zur Aufnahme des Probematerials aufweist, wobei die Presseinrichtung (18) ein Gehäuse (28) aufweist und der Presstempel (30) innerhalb des Gehäuses (28) zwischen einer zurückgezogenen Position und einer Pressposition bewegbar angeordnet ist und wobei ein Ring (40) und eine Gegendruckplatte (38) vorgesehen sind, die mit dem Presstempel (30) in der Pressposition zusammenwirken,
**dadurch gekennzeichnet, dass** die Vorrichtung eine Magneteinrichtung (20) aufweist, die derart angeordnet ist, dass Eisenpartikel des Probematerials in der Presseinrichtung, der Presstempel (30) und/oder der Ring (40) oder die Gegendruckplatte (38) und/ oder der Ring (40) durch die Magneteinrichtung (20) magnetisierbar sind, sodass sich die Eisenpartikel in einem Randbereich innerhalb des Probematerials anlagern.

10. Vorrichtung (10) nach Anspruch 9, wobei die Magneteinrichtung (20) einen Permanentmagneten oder einen Elektromagneten (24) umfasst.

11. Vorrichtung (10) nach Anspruch 9 oder 10, wobei die Magneteinrichtung (20) in dem Gehäuse (28) oder an der Gegendruckplatte (38) angeordnet ist.

12. Vorrichtung (10) nach einem der vorangehenden Ansprüche, wobei der Zerkleinerungseinrichtung (12) eine Leitung (16) zum Leiten des Probematerials nachgeschaltet ist und wobei eine weitere Magneteinrichtung (20) an der Leitung (16) angebracht ist.

13. Vorrichtung (10) nach einem der vorangehenden Ansprüche, wobei zumindest eine Magneteinrichtung (20) relativ zu der Presseinrichtung (18) und / oder der Leitung (16) bewegbar angebracht ist.

14. Vorrichtung (10) nach einem der vorangehenden Ansprüche, wobei eine Vibrationseinrichtung zum Vibrieren der Magneteinrichtung (20), der Leitung (16) und / oder des Pressstempels (30) vorgesehen ist.

## Claims

1. Method for preparing a sample material, in particular slag or ore, from a mineral or steel production process, comprising the following steps:
a. comminuting the sample material in a comminuting device (12),
b. supplying the sample material to a press device (18) to press the sample material to form a tablet, wherein the sample material is received on a press ram (30) of the press device (18),
c. generating a magnetic field and magnetizing iron particles contained in the sample material in the press ram by means of a magnet device, such that the iron particles accumulate in a region within the sample material arranged in the press ram facing toward the magnet device,
d. pressing the sample material to form a tablet.

2. Method according to any one of the preceding claims, wherein step c. comprises the plunging of the magnet device into the sample material.

3. Method according to any one of the preceding claims, wherein the press ram (30) of the press device (18) is magnetized by the magnet device (20) and the iron particles of the sample material accumulate in the peripheral region of the sample material facing toward the press ram (30).

4. Method according to any one of the preceding claims, wherein the magnet device (20) is moved from a position outside the press device (18) into a position inside the press device (18) before step c..

5. Method according to any one of the preceding claims, wherein a line (16) for conducting the sample material is connected downstream of the comminuting device (12) and a further magnet device (20) is attached on the line (16) and wherein the method comprises the following steps:
conducting the sample material following the comminuting device (12) through the line and accumulating the iron particles of the sample material on a wall region of the line (16).

6. Method according to any one of the preceding claims, wherein the magnet device (20), the press device (18), and/or the line (16) and in particular the sample material are vibrated.

7. Method according to any one of the preceding claims, wherein the comminuting device comprises a crusher device and/or a grinder device and wherein a line (16) for conducting the sample material having a further magnet device (20) is connected downstream in each case from the crusher device and/or the grinder device and wherein the sample material is conducted through the line following the grinder device and/or the crusher device and the iron particles are removed from the sample material.

8. Method according to any one of the preceding claims, wherein the sample material is analyzed by means of an RFA and/or an RDA analysis following step c..

9. Apparatus (10) for preparing a sample material, in particular slag or ore, from a mineral or steel production process, having:
at least one comminuting device (12) for comminuting the sample material, wherein a press device (18) for pressing the sample material, in particular to form a tablet, is connected downstream of the comminuting device (12), and the press device (18) has a press ram (30) for receiving the sample material, wherein the press device (18) has a housing (28) and the press ram (30) is arranged so it is movable inside the housing (28) between a retracted position and a pressing position and wherein a ring (40) and a counter pressure plate (38) are provided, which cooperate with the press ram (30) in the pressing position,
**characterized in that** the apparatus has a magnet device (20), which is arranged such that iron particles contained in the sample material in the press device, the press ram (30) and/or the ring (40), or the counter pressure plate (38) and/or the ring (40) are magnetizable by the magnet device (20), and therefore the iron particles accumulate in a peripheral region within the sample material.

10. Apparatus (10) according to Claim 9, wherein the magnet device (20) comprises a permanent magnet or an electromagnet (24).

11. Apparatus (10) according to Claim 9 or 10, wherein the magnet device (20) is arranged in the housing (28) or on the counter pressure plate (38).

12. Apparatus (10) according to any one of the preceding claims, wherein a line (16) for conducting the sample material is connected downstream of the comminuting device (12) and wherein a further magnet device (20) is attached on the line (16).

13. Apparatus (10) according to any one of the preceding claims, wherein at least one magnet device (20) is attached so it is movable in relation to the press device (18) and/or the line (16).

14. Apparatus (10) according to any one of the preceding claims, wherein a vibration device is provided for vibrating the magnet device (20), the line (16), and/or the press ram (30).

## Revendications

1. Procédé pour préparer un échantillon de matériau, notamment un laitier ou du bronze, à partir d'un processus de fabrication de minerai ou d'acier, comprenant les étapes suivantes :
a. broyage de l'échantillon de matériau dans un dispositif de broyage (12),
b. acheminement de l'échantillon de matériau à un dispositif de pressage (18) en vue de presser l'échantillon de matériau en une tablette, l'échantillon de matériau étant accueilli au niveau d'un piston de pressage (30) du dispositif de pressage (18),
c. génération d'un champ magnétique et magnétisation de particules de fer de l'échantillon de matériau dans le piston de pressage au moyen d'un dispositif magnétique, de sorte que les particules de fer se fixent dans une zone faisant face au dispositif magnétique à l'intérieur de l'échantillon de matériau disposé dans le piston de pressage,
d. pressage de l'échantillon de matériau pour former une tablette.

2. Procédé selon l'une des revendications précédentes, l'étape c. comprenant l'enfoncement du dispositif magnétique dans l'échantillon de matériau.

3. Procédé selon l'une des revendications précédentes, le piston de pressage (30) du dispositif de pressage (18) étant magnétisé par le dispositif magnétique (20) et les particules de fer de l'échantillon de matériau se fixant dans la zone de bordure de l'échantillon de matériau qui fait face au piston de pressage (30).

4. Procédé selon l'une des revendications précédentes, le dispositif magnétique (20), avant l'étape c., étant déplacé d'une position en-dehors du dispositif de pressage (18) dans une position à l'intérieur du dispositif de pressage (18).

5. Procédé selon l'une des revendications précédentes, une conduite (16) servant à conduire l'échantillon de matériau étant montée en aval du dispositif de broyage (12) et un dispositif magnétique (20) supplémentaire étant monté sur la conduite (16) et le procédé comprenant les étapes suivantes :
conduite de l'échantillon de matériau à la suite du dispositif de broyage (12) à travers la conduite et fixation des particules de fer de l'échantillon de matériau sur une zone de paroi de la conduite (16).

6. Procédé selon l'une des revendications précédentes, le dispositif magnétique (20), le dispositif de pressage (18) et/ou la conduite (16) et notamment l'échantillon de matériau étant amenés en vibration.

7. Procédé selon l'une des revendications précédentes, le dispositif de broyage comportant un dispositif de concassage et/ou un dispositif de pulvérisation et une conduite (16) servant à conduire l'échantillon de matériau et pourvue d'un dispositif magnétique (20) supplémentaire étant respectivement montée en aval du dispositif de concassage et/ou du dispositif de pulvérisation et l'échantillon de matériau, à la suite du dispositif de concassage et/ou du dispositif de pulvérisation, étant conduit à travers la conduite et les particules de fer étant éliminées de l'échantillon de matériau.

8. Procédé selon l'une des revendications précédentes, l'échantillon de matériau, à la suite de l'étape c., étant analysé au moyen d'une analyse RFA et/ou d'une analyse RDA.

9. Arrangement (10) pour préparer un échantillon de matériau, notamment un laitier ou du bronze, à partir d'un processus de fabrication de minerai ou d'acier, comprenant :
au moins un dispositif de broyage (12) destiné à broyer l'échantillon de matériau, un dispositif de pressage (18) destiné à presser l'échantillon de matériau, notamment en une tablette, étant monté en aval du dispositif de broyage (12), et le dispositif de pressage (18) possédant un piston de pressage (30) servant à accueillir l'échantillon de matériau, le dispositif de pressage (18) possédant un boîtier (28) et le piston de pressage (30) étant disposé à l'intérieur du boîtier (28) de manière à pouvoir être déplacé entre une position rétractée et une position de pressage et une bague (40) et un plateau de contre-pression (38) étant présents, lesquels coopèrent avec le piston de pressage (30) dans la position de pressage,
**caractérisé en ce que** l'arrangement possède un dispositif magnétique (20) qui est disposé de telle sorte que les particules de fer de l'échantillon de matériau dans le dispositif de pressage, le piston de pressage (30) et/ou la bague (40) ou le plateau de contre-pression (38) et/ou la bague (40) peuvent être magnétisés par le dispositif magnétique (20), de sorte que les particules de fer se fixent dans une zone de bordure à l'intérieur de l'échantillon de matériau.

10. Arrangement (10) selon la revendication 9, le dispositif magnétique (20) comportant un aimant permanent ou un électroaimant (24).

11. Arrangement (10) selon la revendication 9 ou 10, le dispositif magnétique (20) étant disposé dans le boîtier (28) ou au niveau du plateau de contre-pression (38) .

12. Arrangement (10) selon l'une des revendications précédentes, une conduite (16) destinée à conduire l'échantillon de matériau étant montée en aval du dispositif de broyage (12) et un dispositif magnétique (20) supplémentaire étant monté sur la conduite (16).

13. Arrangement (10) selon l'une des revendications précédentes, au moins un dispositif magnétique (20) étant monté mobile par rapport au dispositif de pressage (18) et/ou à la conduite (16).

14. Arrangement (10) selon l'une des revendications précédentes, un dispositif vibrant servant à faire vibrer le dispositif magnétique (20), la conduite (16) et/ou le piston de pressage (30) étant présent.
